**Europäisches Patentamt**

(19) **European Patent Office**

**Office européen des brevets**

(11) Numéro de publication : **0 199 647**
**B1**

(12) **FASCICULE DE BREVET EUROPÉEN**

(45) Date de publication du fascicule du brevet :
**09.08.89**

(21) Numéro de dépôt : **86400845.3**

(22) Date de dépôt : **18.04.86**

(51) Int. Cl.⁴ : **G 21 C  3/18**

(54) Crayon de combustible nucléaire à maintien d'empilement de pastilles.

(30) Priorité : **19.04.85 FR 8506014**

(43) Date de publication de la demande :
**29.10.86 Bulletin 86/44**

(45) Mention de la délivrance du brevet :
**09.08.89 Bulletin 89/32**

(84) Etats contractants désignés :
**BE CH DE GB IT LI SE**

(56) Documents cités :
**EP–A– 0 064 139
DE–A– 1 614 308
DE–A– 1 947 202
FR–A– 2 100 548
GB–A– 2 084 383
US–A– 4 080 253**

(73) Titulaire : **FRAMATOME
Tour Fiat 1, Place de la Coupole
F-92400 Courbevoie (FR)**

(72) Inventeur : **Cloue, Jean Marc
8, rue Jacques Prévert
F-69140 Rilleux La Pape (FR)**

(74) Mandataire : **Fort, Jacques et al
CABINET PLASSERAUD 84, rue d'Amsterdam
F-75009 Paris (FR)**

EP 0 199 647 B1

Jouve, 18, rue St-Denis, 75001 Paris, France

## Description

L'invention concerne les crayons de combustible nucléaire utilisés dans les réacteurs et comportant une gaine étanche contenant un empilement de pastilles de combustible et des moyens de maintien de l'empilement en appui contre un bouchon terminal de la gaine. Le terme « combustible » doit être interprété de façon large et comme désignant non seulement les matériaux utilisés pour produire de l'énergie par fission, mais aussi ceux dits fertiles ou absorbants.

Les crayons de combustible utilisés à ce jour, notamment dans les réacteurs refroidis par circulation d'eau ou de sodium fondu, comprennent un empilement de pastilles de combustible oxyde et des moyens de maintien constitués par un ressort hélicoïdal. Cette solution présente des inconvénients notables. Le ressort a un encombrement important, qui diminue le volume disponible pour recevoir les gaz de fission relâchés par le combustible. Sous irradiation, les matériaux constitutifs des ressorts présentent une relaxation qui leur fait perdre une fraction des propriétés de départ. Souvent, la dégradation au cours du fonctionnement en réacteur est telle que les moyens de maintien n'assurent plus une retenue suffisante au cours des opérations de manutention et de transport du combustible irradié.

Diverses solutions ont déjà été proposées pour tenter de résoudre ce problème. Le document FR-A-2 529 371 décrit un crayon de combustible dont le ressort de maintien est en un matériau tel que la force qu'il exerce diminue lorsque la température augmente. Le seul intérêt de cette solution est de réduire les contraintes subies par les pastilles de combustible lors du fonctionnement. Le document FR-A-2 018 665 décrit un crayon dans lequel le ressort est remplacé par un organe en forme de godet fendu pour s'appliquer élastiquement contre la gaine. Un tel organe a l'inconvénient, d'une part, d'exercer une force de retenue constante, d'autre part et surtout, de rester en place en cas de rétraction de l'empilement de pastilles, de sorte qu'il ne maintient plus cet empilement au cours du transport. Aucune de ces solutions n'est donc vraiment satisfaisante.

On connaît également un crayon de combustible nucléaire suivant le préambule de la revendication 1 (GB-A-2 084 383). Ce crayon comporte des moyens de maintien ayant un élément radialement déformable destiné à s'appuyer contre la surface intérieure de la gaine et des moyens sensibles à la température pour contrarier les déformations de l'élément. Ce sont les moyens sensibles à la température qui exercent sur les moyens de maintien une force qui les applique à froid contre la gaine, alors que l'élasticité de l'élément tend à le contracter et à le dégager de la gaine en fonctionnement normal en réacteur.

Enfin, on connaît (DE-A-1 614 308) un crayon de combustible muni de moyens de retenue constitués par un élément expansible bimétallique de forme particulière.

L'invention vise à fournir un crayon de combustible nucléaire dont les moyens de maintien répondent mieux que ceux antérieurement connus aux exigences de la pratique, notamment en ce qu'ils présentent un encombrement réduit et n'exigent pas des caractéristiques élastiques élevées pour assurer une force de maintien sensiblement constante quel que soit le gonflement des pastilles sous irradiation. Elle utilise pour cela le fait que le maintien n'est essentiel qu'au cours du transport et de la manutention des crayons, puisque les crayons sont en position verticale lors du fonctionnement en réacteur et que l'empilement de pastilles est alors tout naturellement en appui sur le bouchon inférieur de la gaine, et propose un crayon conforme à la revendication 1.

On sait que les alliages à mémoire de forme, dont les premiers remontent à une vingtaine d'années, peuvent, au-dessous d'une température de transition être déformés de façon plastique. Mais, dès qu'ils sont chauffés au-dessus de la température de transition, ils reprennent la forme qui leur a été donnée au cours d'un traitement métallurgique de façonnage. On connaît de nombreux alliages répondant à cette condition, présentant des températures de transition échelonnées. On trouvera notamment une description de tels alliages dans l'article « Some applications of shape memory alloys », publié dans Journal of Metals, juin 1980, pp. 129-137. Parmi les alliages utilisables pour mettre en œuvre l'invention, on peut notamment citer les alliages titane-nickel dont le passage de la phase austénitique à la phase martensitique et inversement intervient à une température inférieure à 400 °C, c'est-à-dire à l'ordre de grandeur de la température atteinte dans la chambre de réception des gaz de fission ou plenum d'un crayon de combustible, du moins dans un réacteur à eau sous pression du genre actuellement en service. On trouvera des exemples de tels alliages titane-nickel dans le document GB-A-2 117 001.

L'empilement de pastilles est susceptible de se raccourcir au cours du refroidissement du crayon, au-dessous de la température de transition. Des moyens élastiques sont avantageusement interposés entre l'élément expansible et la pastille terminale de l'empilement, de façon à rattraper les variations éventuelles de longueur. Ces moyens élastiques comprennent avantageusement une pastille d'appui sur l'empilement, reliée à l'élément radialement expansible par un premier ressort travaillant en extension et un second ressort, en alliage à mémoire de forme présentant une température de transition supérieure à la plage des températures atmosphériques et inférieure à la valeur prédéterminée mentionnée plus haut, ce second ressort exerçant, au-dessus de sa température de transition, un effort de rétraction supérieur à l'effort du premier.

On voit que les moyens de maintien suivant l'invention utilisent le fait que leur fonction n'est plus nécessaire lors du fonctionnement du réacteur. Mais, lors du refroidissement du réacteur avant déchargement, la réversibilité de la mémoire de forme de l'alliage permet à l'élément radialement expansible de venir s'appuyer sur la gaine et exercer une force de frottement qui l'immobilise. Lors du fonctionnement, l'élément expansible étant pratiquement libre peut suivre les déplacements de la pastille terminale de l'empilement, dûs par exemple aux gonflements sous irradiation. Enfin, la suppression d'un ressort en appui sur le bouchon facilite le soudage de ce dernier lors de la fabrication.

L'invention sera mieux comprise à la lecture de la description qui suit de modes particuliers d'exécution, donnés à titre d'exemples non limitatifs. La description se réfère aux dessins qui l'accompagnent, dans lesquels :

la Figure 1 est une vue en coupe longitudinale d'une fraction d'un crayon de combustible nucléaire, muni de moyens de maintien suivant un premier mode d'exécution,

la Figure 2 est une vue en coupe suivant la ligne II-II de la Figure 1,

la Figure 3, similaire à la Figure 1, montre un autre mode de réalisation de l'invention,

la Figure 4 est une vue en coupe suivant la ligne IV-IV de la Figure 3,

les Figures 5 et 6, similaires aux Figures 1 et 2, montrent une variante de réalisation,

la Figure 7, similaire à la Figure 1, montre des moyens de maintien comprenant le même élément radialement expansible que celui montré en Figure 1, associé à des moyens de récupération des variations de longueur de l'empilement.

la Figure 8 est une vue de dessus de moyens de maintien constituant une autre variante encore de réalisation de l'invention,

la Figure 8A est une vue, en coupe longitudinale partielle, suivant la ligne A-A de la Figure 8,

les Figures 9 et 10 sont respectivement une vue en coupe longitudinale partielle et une vue de dessus du mode de réalisation des Figures 8 et 8A, le ressort de petit diamètre n'étant pas représenté,

les Figures 11 et 12, similaires aux Figures 9 et 10, sont des représentations des moyens des Figures 8 et 8A sans le ressort de grand diamètre.

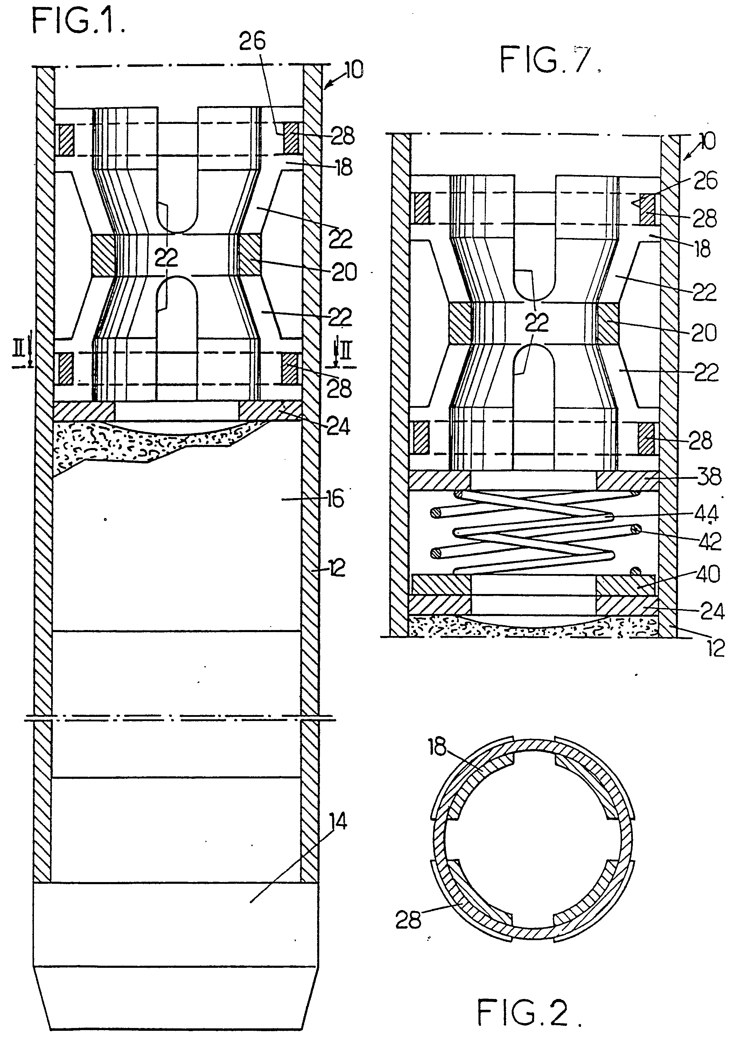

Le crayon combustible 10 dont une fraction est montrée en Figure 1 a une constitution générale similaire à celle des éléments couramment utilisés dans les réacteurs refroidis et modérés à l'eau sous pression. Il comporte une gaine 12, généralement en alliage à base de zirconium, fermée par des bouchons 14 dont un seul est représenté. La majeure partie de la longueur de la gaine est occupée par un empilement de pastilles 16 d'oxyde d'uranium ou d'oxyde mixte d'uranium et de plutonium.

Le crayon de combustible doit comporter des moyens de maintien de l'empilement 16 contre le bouchon inférieur 14 lors des manutentions et des transports. Dans les crayons de combustible classiques, ces moyens comportent un ressort hélicoïdal placé dans la chambre ou « plenum » de reception des produits de fission, au-dessus de l'empilement de pastilles 16. Ce ressort est comprimé entre l'empilement et le bouchon supérieur du crayon et doit être en un matériau présentant des caractéristiques d'élasticité telles qu'il n'y ait pas de modification notable de la force de maintien au cours du séjour en réacteur, en dépit du rayonnement reçu par le ressort et de l'allongement de l'empilement.

Conformément à l'invention, les moyens de maintien ont la propriété d'être immobilisés dans la gaine 12 lorsque l'élément est froid et de pouvoir se déplacer pratiquement librement dans cette gaine lorsqu'ils sont portés à la température de fonctionnement dans le réacteur.

Dans le mode de réalisation montré en Figures 1 et 2, ces moyens comprennent un élément radialement expansible 18 en forme de diabolo entaillé par des fentes régulièrement réparties angulairement, découpées à partir des deux extrémités et laissant subsister un anneau central continu 20. Les deux jeux de fentes (au nombre de quatre dans le mode de réalisation représenté) délimitent des doigts d'appui élastique contre la surface interne de la gaine 12. En d'autres termes, l'élément en forme de diabolo 18 a un diamètre au repos tel que les doigts s'appuient contre la gaine et opposent une force de frottement importante au déplacement longitudinal. Entre l'élément 18 et l'empilement 16 est interposée une rondelle 24 constituant écran thermique, de façon que la température de l'élément 18 reflète celle du liquide de refroidissement plutôt que celle des pastilles.

Dans chaque jeu de doigts est ménagée une gorge circonférentielle 26 de réception d'une bague 28 en un matériau à mémoire de forme qui, à la température atmosphérique, suit les mouvements des doigts sans opposer de force élastique importante mais qui, au-dessus de la température de transition du matériau qui la constitue, exerce une force de rétraction suffisante pour que les doigts s'inscrivent dans un cercle de plus petit diamètre que le diamètre intérieur de la gaine 12. Lorsque la bague 28 prend ainsi la forme initiale qui lui a été donnée, elle permet à l'élément 18 de glisser soit sous la poussée de l'empilement en cas de gonflement des pastilles, soit vers le bas sous l'action de son propre poids en cas de contraction lors d'une baisse de température.

Mais, dès que, lors du refroidissement du réacteur après arrêt de ce dernier, la température de la bague descend au-dessous du point de transition, la bague laisse les doigts se déployer et bloquer l'élément 18, en retenant ainsi l'empilement de pastilles 16.

On peut notamment utiliser les matériaux suivants pour constituer les composants des moyens de maintien :

Elément expansible 18, alliage dit « INCONEL 718 » ou acier inoxydable 13/8.

Bague 28 : alliage titane-nickel ayant une teneur atomique en titane comprise entre 51 et 53 %, dont la température de transition est d'environ 100 °C.

Rondelle 24 : alumine.

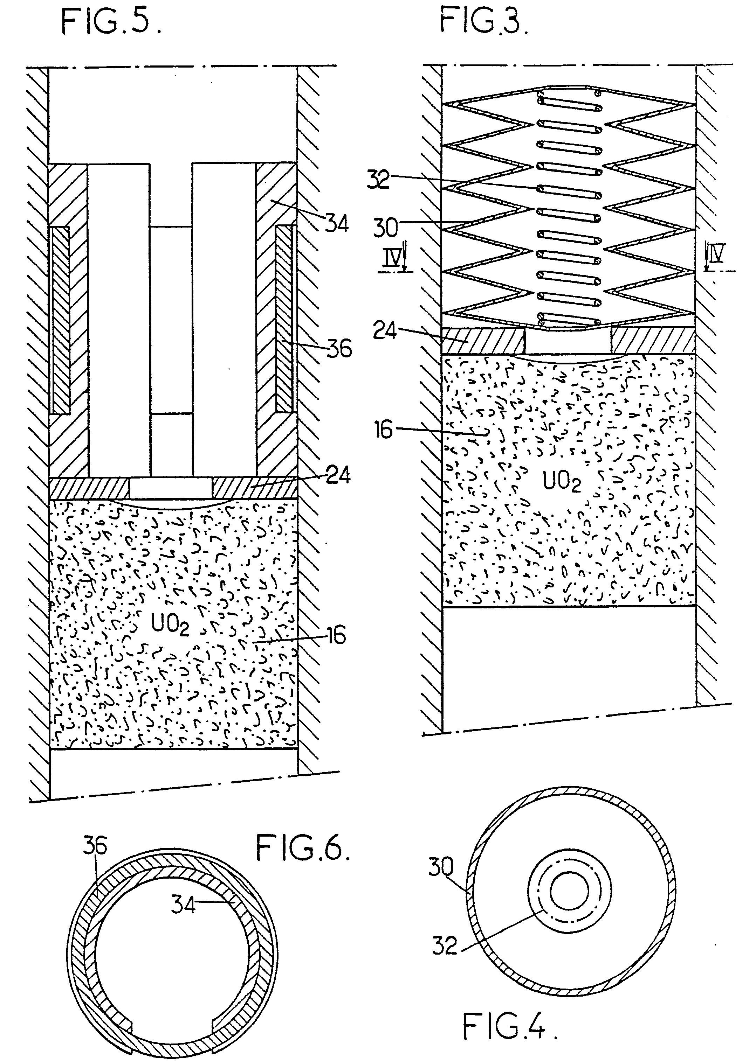

Dans le mode de réalisation montré en Figures 3 et 4, l'élément expansible est constitué par un soufflet 30 de révolution, dont les plis externes sont prévus pour s'appuyer sur la gaine. Les moyens sensibles à la température sont constitués cette fois par un ressort hélicoïdal 32 en matériau à mémoire de forme disposé dans l'axe du soufflet 30, comprimé entre les parois terminales du soufflet. Tel que le soufflet est montré en Figure 3, à une température inférieure au point de transition du matériau constitutif du ressort 32, les plis externes du soufflet sont en contact de frottement avec la surface interne de la gaine 12 et maintiennent en place l'empilement de pastilles 16. Lors du fonctionnement en réacteur, lorsque la température du ressort 32 est supérieure au point de transition, le ressort l'allonge jusqu'à reprendre la forme qui lui a été donnée initialement et les plis externes du soufflet 30 ne frottent plus sur la gaine, ce qui laisse l'empilement de pastilles 16 libre de se dilater.

Au lieu d'utiliser un élément à mémoire de forme constitué par un ressort 32, on pourrait placer, dans le soufflet 30, une plaque vrillée ou un autre élément permettant de rétracter les plis du soufflet 30 au-dessus de la température de transition.

Dans la variante de réalisation montrée en Figures 5 et 6 (où les organes identiques à ceux des Figures 1 et 2 sont encore désignés par le même numéro de référence), l'élément radialement expansible se réduit à un anneau 34 à section droite en forme de C, dans lequel est ménagée une gorge centrale de réception d'une bague continue 36 en matériau à mémoire de forme.

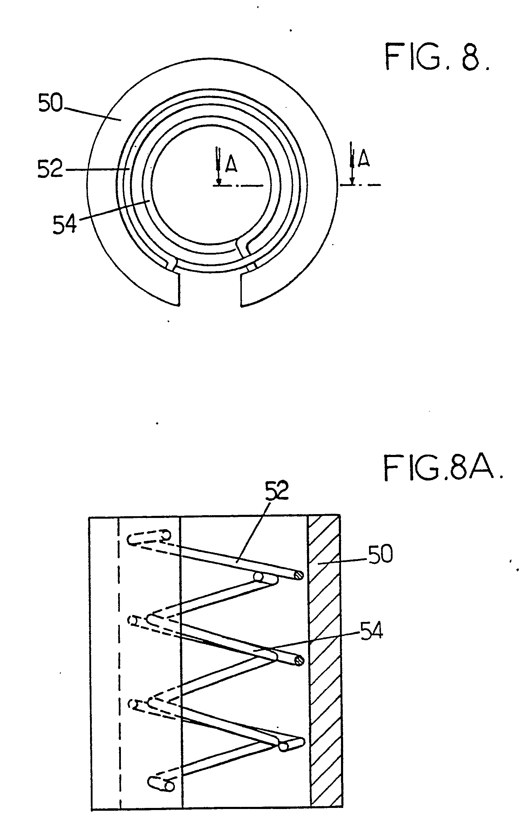

La variante de réalisation montrée en Figure 7 comprend un élément radialement expansible 18 et des bagues 28 identiques à ceux montrés en Figures 1 et 2. Mais l'élément 18 ne prend pas directement appui sur la rondelle 24. Il en est séparé par des moyens de récupération des variations de longueur de l'empilement au-dessous de la température de transition du matériau constituant les bagues 28. Ces moyens de récupération comportent deux rondelles d'appui 38 et 40 reliées, d'une part, par un ressort 42 tendant à écarter les rondelles 38 et 40 l'une de l'autre, d'autre part, par un second ressort 44 constitué en un alliage à mémoire de forme. La température de transition de l'alliage constituant le second ressort 44 doit être inférieure à celle de l'alliage constituant la bague 28. Par exemple, on peut adopter, pour les bagues 28, l'alliage ci-dessus défini et, pour le ressort 44, un alliage titane-nickel ayant 45 à 45,5 % at. de titane.

Ainsi, lorsque la température commence à augmenter après que le crayon de combustible ait été mis en réacteur, le ressort 44, travaillant en traction, va entraîner les rondelles 38 et 40 l'une vers l'autre, en comprimant le ressort 42. Puis, à température plus élevée, les bagues 28 vont libérer l'élément radialement expansible 18.

Inversement, lorsque la température diminue, après arrêt du réacteur, les bagues 28 libèrent l'élément expansible 18 qui se verrouille. Puis le ressort 44 se détend, laissant le ressort 42 appliquer, sur l'empilement de pastilles, un effort suffisant pour rattraper l'ensemble des jeux, avec une élasticité qui permet de compenser les variations de longueur.

Le mode de réalisation de l'invention montré en Figures 8 à 12 comprend un élément radialement expansible constitué par un anneau fendu 50, pouvant encore être considéré comme une bague ayant une section en forme de C. Cet anneau 50 a un diamètre au repos tel qu'il tend à s'appliquer élastiquement contre la paroi interne de la gaine de l'élément combustible dans lequel il est monté, en assurant par friction le maintien des pastilles de combustible.

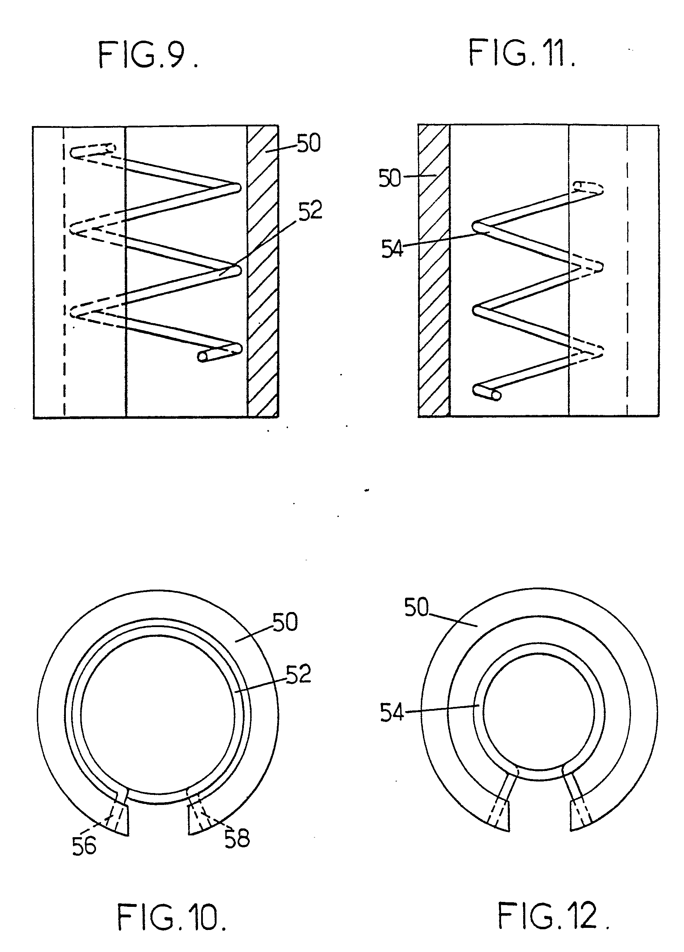

Les moyens sensibles à la température comprennent deux ressorts bobinés 52 et 54. Ces deux ressorts sont placés coaxialement l'un à l'autre et ont des sens d'enroulement opposés et des diamètres différents. Chacun des ressorts se termine par deux pattes rabattues encastrées dans la bague, à proximité des bors de la fente. Sur la Figure 10 apparaissent les pattes 56 et 58 terminales du rerssort de grand diamètre 52.

Lorsque la température des ressorts 52 et 54 augmente à partir de la température ambiante, il y a rotation relative des pattes terminales des ressorts. Ce mouvement de rotation est provoqué par l'effet mémoire du matériau qui les constitue. Ce matériau peut en particulier être un alliage titane-nickel ayant une teneur atomique de 51 à 53 % de titane.

Le mouvement de rotation relatif des pattes terminales encastrées dans la bague 50 tend à refermer cette dernière et à faire cesser le frottement entre la bague et la gaine. Le déplacement de la bague 50 devient alors libre dans la gaine, de sorte que la colonne de pastilles peut librement s'allonger.

Lors du refroidissement, les faibles caractéristiques de résistance mécanique de l'alliage à mémoire ou, si cet alliage a une mémoire réversible, le passage au-dessous de la température de transition, permettent à l'anneau 50 de reprendre sa forme initiale en appui contre la gaine, immobilisant ainsi la colonne de pastilles.

## Revendications

1. Crayon de combustible nucléaire comportant une gaine (12) étanche, contenant un empilement (16) de pastilles de combustible et des moyens de maintien de l'empilement en appui contre un bouchon terminal (14) de la gaine au cours des manutentions, lesdits moyens de maintien comportant un élément (18) radialement déformable destiné à s'appuyer contre la surface intérieure de la gaine (12) et des moyens (28) sensibles à la température pour contrarier les déformations dudit élément, c'est-à-dire pour contracter ledit élément et réduire son frottement sur la gaine lorsque la température dépasse une valeur prédéterminée comprise entre la température atmosphérique et la température de fonctionnement normal en réacteur caractérisé en ce que les moyens sensibles à la température sont constitués en un alliage à mémoire de forme présentant une température de transition comprise entre la température atmosphérique et la température de fonctionnement normal en réacteur et en ce que ledit élément (18) est expansible et a une forme telle qu'à la température atmosphérique, il s'appuie contre la surface intérieure de la gaine.

2. Crayon selon la revendication 1, caractérisé en ce qu'il comprend de plus des moyens élastiques (38-44) comprimés entre l'élément expansible (18) et l'empilement de pastilles (16) lorsque l'élément expansible est bloqué dans la gaine.

3. Crayon selon la revendication 2, caractérisé en ce que lesdits moyens élastiques comprennent une pastille (40) d'appui sur l'empilement, relié à l'élément radial expansible (18) par un premier ressort (42) travaillant en compression et un second ressort (44), en alliage à mémoire de forme présentant une température de transition supérieure à la plage des températures atmosphériques et inférieure à ladite valeur prédéterminée, ce second ressort exerçant, au-dessus de sa température de transition, un effort de rétraction de la pastille (40) supérieur à l'effort du premier.

4. Crayon selon l'une quelconque des revendications précédentes, caractérisé en ce que l'élément radialement expansible est constitué par un élément annulaire (18) présentant au moins un jeu de doigts d'appui élastique sur la gaine (12) régulièrement répartis autour de l'axe, et en ce que les moyens sensibles à la température sont constitués par une bague (28) encerclant totalement ou partiellement les doigts.

5. Crayon selon l'une quelconque des revendications précédentes, caractérisé en ce que l'élément radialement expansible est constitué par un anneau fendu présentant des rebords radiaux et en ce que les moyens sensibles à la température sont constitués par une bague fendue ou non (36) située dans une gorge ménagée dans l'anneau (34) et prévue pour contracter ce dernier.

6. Crayon selon l'une quelconque des revendications précédentes, caractérisé en ce que l'élément expansible est constitué par un soufflet (30) présentant une forme de révolution et ayant des plis externes d'appui sur la gaine.

7. Crayon selon la revendication 7, caractérisé en ce que les moyens sensibles à la température comprennent un ressort axial (32) en matériau à mémoire de forme destiné à exercer une force d'extension sur le soufflet.

8. Crayon selon l'une quelconque des revendications 1 à 3, caractérisé en ce que l'élément radialement expansible est constitué par un anneau fendu (50) ayant une forme au repos telle qu'il tend à s'appliquer contre la gaine et en ce que les moyens sensibles à la température comportent un ou, avantageusement, deux ressorts bobinés en alliage à mémoire et dont les pattes terminales sont encastrées dans l'anneau à proximité de la fente.

## Claims

1. Nuclear fuel rod comprising a sealing sheath (12) containing a stack (16) of fuel pellets and means for retaining the stack in abutment against an end plug (14) of the sheath during handling, said retaining means comprising a radially deformable element (18) arranged to engage the internal surface of the sheath (12) and temperature sensitive means (28) for opposing the deformation of said element i. e. for contracting said element and reducing its friction on the sheath when the temperature exceeds a predetermined value comprised between the atmospheric pressure and the normal operating temperature in the reactor, characterized in that the temperature sensitive means are constituted of a shape memory alloy having a transition temperature comprised between the atmospheric temperature and the normal operating temperature in the reactor and in that said element (18) is expandable and has such a shape that it engages the internal surface of the sheath when at the atmospheric temperature.

2. Rod according to claim 1, characterized in that it further comprises resilient means (38-44) compressed between the expandable element (18) and the stack of pellets (16) when the expandable element is locked within the sheath.

3. Rod according to claim 2, characterized in that said resilient means comprise a washer (40) in contact with the stack, connected to the radially expandable element (18) by a first spring (42) under compression and a second spring (44) of shape-memory alloy having a transition temperature higher than the range of the atmospheric temperatures and lower than said predetermined value, the second spring exerting a retracting force on the washer (40) which is higher than the force of the first spring when above its transition temperature.

4. Rod according to any one of the preceding claims, characterized in that the radially expandable element consists of an annular element (18) having at least one set of fingers for resilient engagement with the sheath (12), regularly distributed about the axis, and in that the temperature sensitive means consist of a ring (28) partially or totally encircling the fingers.

5. Rod according to any one of the preceding claims, characterized in that the radially expandable element consists of a split thimble having radial flanges and in that the temperature sensitive means consist of a split or unsplit ring (36) accommodated in a groove formed in the thimble (34) and arranged for contracting the latter.

6. Rod according to any one of the preceding claims, characterized in that the expandable element consists of bellows (30) having a rotational symmetry and having outer folds for engaging the sheath.

7. Rod according to claim 6, characterized in that the temperature sensitive means comprise an axial spring (32) of shape-memory material for exerting a lengthening force on the bellows.

8. Rod according to any one of claims 1-3, characterized in that the radially expandable element consists of a slotted thimble (50) having such a shape at rest that it tends to contact the sheath and in that the temperature sensitive means comprise one or, preferably, two coiled springs of shape-memory alloy, having end lugs anchored to the thimble in proximity to the slot.

## Patentansprüche

1. Kernbrennstoffstab mit einer dichten Hülle (12), die eine Schichtung (16) von Brennstofftabletten und Stützeinrichtungen der Schichtung in Anlage gegen einen Endstopfen (14) der Hülle während des Förderns aufweist, wobei die Stützeinrichtungen ein Element (18) aufweisen, das radial deformierbar ist, für seine Anlage gegen die Innenseite der Hülle (12), und Einrichtungen (28) aufweist, die temperaturempfindlich sind, um die Deformationen des Elements zu behindern, d. h. um das Element zusammenzuziehen und seine Reibung auf der Hülle zu reduzieren, wenn die Temperatur einen vorbestimmten Wert zwischen der Umgebunstemperatur und der normalen Reaktorbetriebstemperatur übersteigt, dadurch gekennzeichnet, daß die temperaturempfindlichen Einrichtungen aus einer Formwiedergewinnungslegierung oder Formspeicherlegierung gebildet sind, die eine Übergangstemperatur zwischen der Umgebungstemperatur und der Reaktornormalbetriebstemperatur aufweist, und daß das Element (18) ausdehnbar ist, und eine Form derart aufweist, daß es sich bei Umgebungstemperatur gegen die Innenseite der Hülle abstützt.

2. Brennstoffstab nach Anspruch 1, dadurch gekennzeichnet, daß er weiterhin elastische Einrichtungen (38-44) aufweist, die zwischen dem ausdehnbaren Element (18) und der Tablettenschichtung (16) eingeklemmt sind, wenn das ausdehnbare Element in der Hülle blockiert ist.

3. Brennstoffstab nach Anspruch 2, dadurch gekennzeichnet, daß die elastischen Einrichtungen eine Tablette (40) der Abstützung auf der Schichtung aufweisen, die mit dem radial ausdehnbaren Element (18) durch eine erste Feder (42) die unter Kompression wirkt, und eine zweite Feder (44) verbunden ist, die aus Formwiedergewinnungslegierung gebildet ist, die eine Übergangstemperatur aufweist, die größer ist als der Bereich der Umgebungstemperaturen und geringer ist als der vorbestimmte Wert, wobei die zweite Feder oberhalb ihrer Übergangstemperatur eine Zusammenziehungskraft der Tablette (40) ausübt, die größer ist als die Kraft der ersten.

4. Brennstoffstab nach einem der vorhergehenden Ansprüche, dadurch gekennzeichnet, daß das radial ausdehnbare Element durch ein ringförmiges Element (18) gebildet ist, das wenigstens einen Satz von elastischen Andrückfingern auf die Hülle (12) aufweist, die regelmäßig um die Achse verteilt angeordnet sind, und daß die temperaturempfindlichen Einrichtungen durch einen Ring (28) gebildet sind, der vollständig oder teilweise die Finger umgibt.

5. Brennstoffstab nach einem der vorhergehenden Ansprüche, dadurch gekennzeichnet, daß das radial ausdehnbare Element aus einem geschlitzten Ring gebildet ist, der radiale Ränder aufweist, und daß die temperaturempfindlichen Einrichtungen durch einen geschlitzten oder nicht geschlitzten Ring (36) gebildet sind, der in einer Auskehlung angeordnet ist, die in dem Ring (34) ausgebildet ist und vorgesehen ist, um letzteren zusammenzudrücken.

6. Brennstoffstab nach einem der vorhergehenden Ansprüche, dadurch gekennzeichnet, daß das ausdehnbare Element durch einen Balg (30) gebildet ist, der eine Rotationsform aufweist und Außenanlagefaltungen an die Hülle aufweist.

7. Brennstoffstab nach Anspruch 6, dadurch gekennzeichnet, daß die temperaturempfindlichen Einrichtungen eine Axialfeder (32) aus Formwiedergewinnungsmaterial aufweisen, die dazu bestimmt ist, eine Ausdehnungskraft auf den Balg auszuüben.

8. Brennstoffstab nach einem der Ansprüche 1 bis 3, dadurch gekennzeichnet, daß das radial ausdehnbare Element aus einem geschlitzten Ring (50) gebildet ist, der in Ruhe eine Form derart aufweist, daß er dazu tendiert, gegen die Hülle zu drücken, und daß die temperaturempfindlichen Einrichtungen eine oder vorzugsweise zwei aufgewickelte Federn aus Formspeicherlegierung aufweisen, und deren Endstücke in dem Ring in der Nähe des Schlitzes eingebettet sind.

FIG.1.

FIG.7.

FIG.2.

# FIG.5.

# FIG.3.

34

36

24

16

UO₂

32

30

IV

IV

24

16

UO₂

36

# FIG.6.

34

30

32

# FIG.4.

FIG. 8.

50

52

54

A          A

FIG.8A.

52

50

54

# FIG.9.

# FIG.11.

# FIG.10.

# FIG.12.